(19) Europäisches Patentamt
European Patent Office
Office européen des brevets

(11) **EP 3 611 655 B1**

(12) **EUROPEAN PATENT SPECIFICATION**

(45) Date of publication and mention
of the grant of the patent:
**22.01.2025 Bulletin 2025/04**

(51) International Patent Classification (IPC):
**G06V 20/52** (2022.01)     **G06V 40/10** (2022.01)

(52) Cooperative Patent Classification (CPC):
**G06V 40/103; G06V 20/52**

(21) Application number: **18189123.5**

(22) Date of filing: **15.08.2018**

(54) **OBJECT DETECTION BASED ON ANALYSIS OF A SEQUENCE OF IMAGES**

OBJEKTDETEKTION AUF BASIS DER ANALYSE EINER SEQUENZ AN BILDERN

DÉTECTION D'OBJET BASÉE SUR L'ANALYSE D'UNE SÉQUENCE D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.02.2020 Bulletin 2020/08**

(73) Proprietor: **Hochschule Anhalt
06366 Köthen (DE)**

(72) Inventors:
• **Chmielewski, Ingo
38176 Wendeburg (DE)**
• **Matveev, Ivan
06366 Köthen (DE)**
• **Siemens, Eduard
31319 Sehnde (DE)**

(74) Representative: **Schäferjohann, Volker
Obere Mark 13
30890 Barsinghausen (DE)**

(56) References cited:
**US-A1- 2015 289 337**

• ANTONIO FERNÁNDEZ-CABALLERO ET AL:
"Thermal-Infrared Pedestrian ROI Extraction
through Thermal and Motion Information
Fusion", SENSORS, vol. 14, no. 4, 10 April 2014
(2014-04-10), pages 6666 - 6676, XP055558461,
DOI: 10.3390/s140406666
• EUN JEON ET AL: "Human Detection Based on
the Generation of a Background Image by Using
a Far-Infrared Light Camera", SENSORS, vol. 15,
no. 3, 19 March 2015 (2015-03-19), pages 6763 -
6788, XP055558462, DOI: 10.3390/s150306763
• BERTOZZI M ET AL: "Pedestrian Detection for
Driver Assistance Using Multiresolution Infrared
Vision", IEEE TRANSACTIONS ON VEHICULAR
TECHNOLOGY, IEEE SERVICE CENTER,
PISCATAWAY, NJ, US, vol. 53, no. 6, November
2004 (2004-11-01), pages 1666 - 1678,
XP011122457, ISSN: 0018-9545, DOI: 10.1109/
TVT.2004.834878
• ZHAO XINYUE ET AL: "Robust pedestrian
detection in thermal infrared imagery using a
shape distribution histogram feature and
modified sparse representation classification",
PATTERN RECOGNITION, vol. 48, no. 6, 24
December 2014 (2014-12-24), pages 1947 - 1960,
XP029200786, ISSN: 0031-3203, DOI: 10.1016/
J.PATCOG.2014.12.013

**Description**

The present disclosure is related to the field of object detection in computer vision and image processing. More particularly, the present disclosure is related to outdoor detection of moving objects to control lighting of sidewalks at nighttime.

In order to provide intelligent or adaptive lighting of sidewalks, it is necessary to detect moving objects, in particular pedestrians or cyclists. Lighting is dimmed when no activity is detected, but brightened when movement is detected. Motion detection typically uses dedicated motion sensors or computer vision approaches.

For example, WO 03/098977 A1 discloses a device for switching on and off a light source in a lighting unit that is designed to form part of a group of lighting units arranged along a stretch of road, track or the like. The device comprises a timing circuit designed to generate a signal corresponding to an activation period for a light source comprised in the lighting unit and a movement detector, which is arranged to detect moving objects such as persons and vehicles in its detection area and, when that occurs, to generate an activation signal.

Two kinds of widely used motion sensors are passive infrared and ultrasonic sensors. Passive infrared sensors are compact, low cost and have a low power consumption. However, their operation is highly dependent on the ambient temperature and the ambient brightness level. In addition, outdoor passive infrared sensors are not able to detect fast moving objects. The detection threshold for moving objects is typically limited to a speed of about 3 m/s.

Ultrasonic technology enables obtaining distance information relative to the moving object. The distance information can be used for calculating the velocity of the object motion. Unfortunately, multipath reception of the signal distorts the measurements of the distance between the emitter and the receiver. In addition, these sensors are sensitive to temperature changes, as the temperature has a significant impact on the speed of sound. A further disadvantage is the typically quite small opening angle of operation of about 30-40°.

Another type of motion sensor are radio wave sensors, which are commonly used for object detection in security or surveillance systems. Radio wave sensors have a high sensitivity, which can lead to an incorrect operation of a detector, e.g. due to vibrating equipment or small animals. The efficiency of radio wave sensors depends on the ambient conditions.

Hybrid systems based on combinations of ultrasonic sensors and passive infrared sensors or radio wave sensors and passive infrared sensors focus on indoor object detection and localization. Such systems are thus hardly acceptable for applications related to street lighting.

One widely used computer vision approach for object detection uses algorithms based on histograms of oriented gradients combined with a support vector machine. This approach is used for detection of an object's shape using a feature descriptor for representing its shape. The advantage of the method is the possibility to detect an object independently of the conditions at which an image was taken, e.g. the angle of a camera view, the image resolution, the distance between the object and the camera, or the lighting conditions. In addition, histograms of oriented gradients allow achieving a high accuracy and detecting objects based on a single frame in outdoor scenes. However, the use of histograms of oriented gradients requires high computational efforts due to complexity of the algorithm, which makes the method not applicable for deployment on low-performance SoCs (System on a Chip).

Another approach in computer vision is object detection by means of frame differencing or background subtraction. These methods can be used to detect moving objects by calculating differences between reference images and newly captured images. Background subtraction methods build an average background model, which is regularly updated to adapt to the varying lighting conditions. The most spread methods are based on Gaussian mixture models, such as GMG, KNN, MOG, or MOG2 [1]. These methods are convenient for movement detection using sequences of images in the near infrared spectrum and are thus suitable for an application to smart lighting systems. A further advantage of this approach is that it does not require high computational power and can be implemented on low-performance SoCs. However, an optimization for one-channel images is required in order to achieve feasible results. Also, such methods do not provide functionality for order to achieve feasible results. Also, such methods do not provide functionality for a differentiation between different types of objects. Therefore, they do not allow allocating object types to different detected objects. In addition, the approach is prone to a high false-positive detection error rate due to a weak stability to the dynamic changes in illumination.

The document D1 ("Thermal-Infrared Pedestrian ROI Extraction through Thermal and Motion Information Fusion" from Antonio Fernández-Caballero, López Maria, Serrano-Cuerda Juan in Sensors, vol. 14, no.4, 2014-04-10, pages 6666-6676) describes a possible solution for a thermal-infrared pedestrian detection system. ROI corresponds to region of interest. According to the D1 one solution the single images are investigated with thermal analysis and succeeding images are also investigated with motion analysis. Both techniques result in lists of candidate ROIs $R_{TA}(t)$ and $R_{MA}(t)$. A so-called ROI Fusion technique is applied aiming to sum up or overlap the ROIs coming from Thermal Analysis and Motion Analysis to get a unique list of ROIs $R_F(t)$. What follows is a blob analysis consisting of a ROI width adjustment step and an ROI height adjustment step. Consequently, the newly obtained ROIs are enlisted into another list $R_C(t)$. After a step of pedestrian confirmation, the final list $R_P(t)$ containing detected humans is derived. This step involves testing the ROI's height/width ratio.

The D2 reference ("Human Detection Based on the Generation of a Background Image by Using a Far-Infrared Light Camera" from Eun Jeon, Jong-Suk Choi, Ji Lee, Kwang Shin, Yeong Kim, Toan Le, Kang Park in Sensors vol. 15, no.3, 2015-03-19, pages 6763-6788) also concerns an algorithm for detecting persons in thermal camera images. This algorithms starts out to generate a background image. In this step, a correct background image is obtained by various filtering and erasing of human areas. Then, two (pixel and edge) difference images are obtained from the background and input images. These two binary difference images are combined using pixel-wise conjunction. The thresholds for the difference images are adaptively determined based on the brightness information of the generated background image. The third step addresses human detection in the combined difference image. After applying size filtering and a morphology operation based on the size of the candidate areas, noise is removed. The remaining areas are separated by a vertical and horizontal histogram of the detected regions using the intensity of the background. Detected regions that may have more than two human areas are merged. Therefore, further procedures are performed to separate the candidate regions and to remove noise regions. These are based on the information of the size and ratio (of the height to width) of the sensors candidate regions considering the camera-viewing angle and perspective projection. Finally, the correct human areas are obtained.

The D3 reference ("Pedestrian Detection for Driver Assistance Using Multiresolution Infrared Vision" form Bertozzi M., Broggi A., Fascioli A., Graf T., Meinecke M. in IEEE TRANSACTIONS ON VEHICULAR TECHNOLOGY., 2004-11-01, IEEE SERVICE CENTER, PISCATAWAY, NJ., US, vol. 53, no. 6, 2004-11-01, pages 1666-1678) teaches also a pedestrian detection algorithm for evaluating images from infrared cameras. Bounding boxes are used for marking regions of interest. The document also teaches to extract contours of regions of interest. The object contours however, are used to eliminate unwanted regions of interest. This is done by determining the vertical extension of an object contour. If an ROI has a short vertical contour shorter than a threshold value, the corresponding bounding box is eliminated from the candidate list of human objects. If a number of vertical contours longer than a threshold value is located in the center of a bounding box, such bounding box will also be eliminated from the list.

In summary, contemporary existing detection means, which can be used in an outdoor environment for detection of pedestrians, cyclists or other moving objects, have a number of significant disadvantages, in most cases a high detection error rate and a low detection range. Their detection reliability heavily depends on the operating conditions. Also, these detection means have limitations regarding the type of object to be detected.

Widely spread computer vision methods have achieved significant successes related to the object detection task. However, these methods either require high computational power of the processing unit or do not support separation of object types.

There is, therefore, a need for an improved, less computing intensive approach for detection of a wanted moving object in a sequence of images.

This object is achieved by a method according to claim 1, a corresponding apparatus according to claim 11 for performing the method, a corresponding computer program according to claim 12, and a lighting unit according to claim 13. The dependent claims include advantageous further developments and improvements of the present principles as described below.

The proposed solution concerns an approach for a robust detection of objects in a sequence of images, e.g. infrared images, in a dark street environment. For instance, the objects may be pedestrians and cyclists. The approach focuses on the detection of the type of moving object within a control area via analysis and evaluation of geometrical parameters of the object. As input data, information about a bounding rectangle and information about a contour area of the moving object are used. This information may be obtained by processing the sequence of images, by receiving results of a dedicated preprocessing stage, or by retrieving available processing results from a memory. The proposed solution is especially advantageous for object detection and classification in a dark ambiance.

In one advantageous embodiment, the sequence of images is preprocessed by a background subtraction algorithm and a movement detection algorithm. This allows generating binary masks containing a moving object, which greatly simplifies further processing of the information. In addition, a wide range of implementations of background subtraction algorithms is readily available.

A filtering is applied to the moving object by determining whether the bounding rectangle overlaps with a margin area of the image sensor. When the object enters or leaves a field of camera vision, the object is not fully visible in the image. This can lead to an incorrect determination of its geometrical parameters. To detect crossing of image borders, margins are used. Only those moving objects are considered, which are fully located in the image, i.e. only objects that do not have intersections with the image border. In this way, an erroneous evaluation is avoided.

The geometrical coefficients determined for the moving object include an area coefficient, which is determined from a height and a width of the bounding rectangle and the contour area of the moving object. The moving object is determined not to be a wanted moving object if the area coefficient does not fall within a first range of values. The area coefficient allows a unification of the geometrical parameters, such as a bounding rectangle area, a contour area and an orientation, to a scalar value. In addition, this coefficient has been found to fall into typical value ranges for pedestrians and cyclists. In case the area coefficient is outside those ranges, it can be concluded that the moving object is neither a pedestrian nor a cyclist.

For determining the area coefficient a ratio of the height of the bounding rectangle to the width of the bounding rectangle is compared with boundary values. By evaluation of this ratio an orientation coefficient can be determined, which can be used to filter out very elongated horizontal and vertical objects. Such objects have a low probability of belonging to the desired class of objects, in this case pedestrians and cyclists. Preferably, the ratio is compared with minimal and maximal values of the ratio of height to width of the bounding rectangle, which are the most probable and typical for a pedestrian or a cyclist. For example, the value of the orientation coefficient can be negative when the object does not have the typical elongation of the shape of a pedestrian or a cyclist. In such a case, also the area coefficient is negative, which enables an easy evaluation.

The geometrical coefficients determined for the moving object include an extent coefficient, which is determined from a ratio of the contour area of the moving object to an area of the bounding rectangle. The moving object is determined not to be a wanted moving object if the extent coefficient is smaller than a threshold. The extent can be interpreted as a coefficient indicating how much of the bounding rectangle is filled by the object contour. The parameter allows eliminating insignificant fluctuations of background objects or lighting spots. Such artifacts are frequently present in the images as disproportionate and non-uniform objects.

In one advantageous embodiment, the moving object is split into two or more sub-objects in dependence on the geometrical coefficients. There are cases when the shape of a moving object and the lighting spot of its lamps are presented as one object. This can lead to a false-negative detection, because the shape of the object and, as consequence, the area coefficient, are not typical for the specific type of object. To reduce the probability of non-detected objects, depending on the geometrical coefficients an object may be split into two or more sub-objects, e.g. with equal width of the respective bounding rectangle along a vector of a supposed movement direction. After the splitting procedure, the basic coefficients are calculated for these sub-objects. Preferably, the moving object is only split into two or more sub-objects when the extent coefficient is smaller than a threshold and the area coefficient falls within a second range of values. This ensures that only an object whose bounding rectangle is insufficiently filled by the object contour area and whose area coefficient is within specific limits are split.

A brightness coefficient is determined for the moving object from a ratio of bright areas within the contour area of the moving object to the contour area of the moving object. The moving object is determined not to be a wanted moving object if the brightness coefficient is larger than a threshold. Sudden lighting changes produced by lamps of moving vehicles can significantly influence the detection performance. For example, a lighting spot of a vehicle can take a geometrical shape of an object that leads to a false-positive detection. Evaluation of the brightness coefficient allows estimating the presence of lighting spots on objects that were produced by background subtraction.

An object number value is determined, which indicates the number of objects found in an image of the sequence of images. The moving object is determined not to be a wanted moving object if the object number value is larger than a threshold. The movement of one pedestrian or cyclist typically produces a rather small number of objects in the background mask. In contrast, car movement causes many more objects, mostly the light reflections. When the object number value is larger than the empirically determined threshold this is an indication of movement of a vehicle in the vicinity of the control area.

Advantageously, an apparatus for detecting a wanted moving object in a sequence of images is used by a lighting unit. To this end, the lighting unit comprises a light source and an image sensor. In addition, the lighting unit comprises a device for switching on and off the light source responsive to detecting a wanted moving object by the apparatus.

In the following, the invention will be described by means of advantageous embodiments with reference to figures of a number of drawings. Herein:

Fig. 1    illustrates a flowchart of an exemplary method of detecting a wanted moving object in a sequence of images captured by an image sensor in accordance with an embodiment of the present disclosure;

Fig. 2    illustrates an exemplary apparatus for detecting a wanted moving object in a sequence of images captured by an image sensor in accordance with an embodiment of the present disclosure;

Fig. 3    illustrates an exemplary apparatus for detecting a wanted moving object in a sequence of images captured by an image sensor in accordance with a further embodiment of the present disclosure;

Fig. 4    schematically shows a lighting unit comprising an apparatus for detecting a wanted moving object in a sequence of images captured by an image sensor;

Fig. 5    illustrates a flowchart of an embodiment of a complete detection process including preprocessing and object analysis;

Fig. 6      illustrates margins used for margin crossing filtering;

Fig. 7      shows a filtered background subtraction mask;

Fig. 8      shows an image with originally detected bounding rectangles;

Fig. 9      shows a split background subtraction mask; and

Fig. 10     shows an image with bounding rectangles after object splitting.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

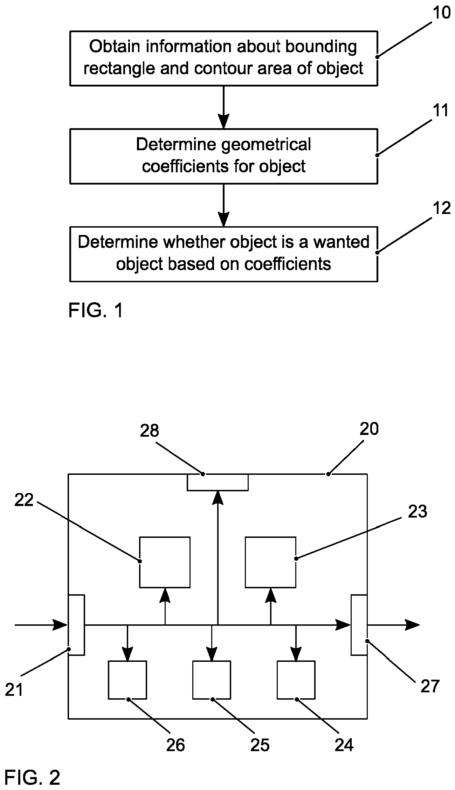

In Fig. 1 a flowchart of an exemplary method of detecting a wanted moving object in a sequence of images captured by an image sensor is shown. In a first step, information about a bounding rectangle of a moving object in the sequence of images and information about a contour area of the moving object are obtained 10. This can be done, for example, by processing the sequence of images, by receiving results of a dedicated preprocessing stage, or by retrieving available processing results from a memory. Geometrical coefficients are then determined 11 for the moving object using the information about the bounding rectangle and the information about the contour area. Based on at least the geometrical coefficients it is determined 12 whether the moving object is a wanted moving object.

A block diagram of a first embodiment of an apparatus 20 for detecting a wanted moving object in a sequence of images captured by an image sensor is illustrated in Fig. 2.

The apparatus 20 has means for obtaining information about a bounding rectangle of a moving object in the sequence of images and information about a contour area of the moving object. For example, the means may comprise an input 21 for receiving results from a dedicated preprocessing system (not shown). The means may likewise comprise a processing unit 22 for processing the sequence of images. Alternatively, available processing results may be retrieved from a local storage unit 26 or an external storage unit (not shown) via the input 21. The apparatus 20 further has means 23 for determining geometrical coefficients for the moving object using the information about the bounding rectangle and the information about the contour area. For example, the means 23 may comprise a processor or an SoC. In addition, the apparatus has means 24 for determining whether the moving object is a wanted moving object based on at least the geometrical coefficients. For example, the means 24 may comprise a logic unit.

The various units 22, 23, 24 of the apparatus 20 may be controlled by a controller 25. The object detection result is preferably made available via an output 27. It may also be stored on the local storage unit 26. The output 27 may also be combined with the input 21 into a single bidirectional interface. A user interface 28 may be provided for enabling a user to modify settings of the various units 22, 23, 24 or the controller 25. The different units 22, 23, 24 and the controller 25 can be embodied as dedicated hardware units. Of course, they may likewise be fully or partially combined into a single unit or implemented as software running on a processor.

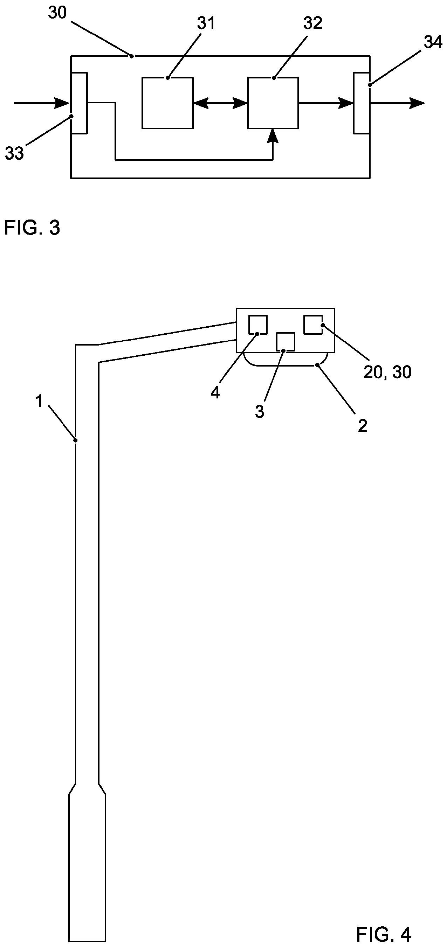

A block diagram of a second embodiment of an apparatus 30 for detecting a wanted moving object in a sequence of images captured by an image sensor is illustrated in Fig. 3.

The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment according to the present principles, said adaptation comprises that the processor is configured, e.g. programmed, to perform steps according to one of the described methods.

A processor as used herein may include one or more processing units, such as microprocessors, digital signal processors, or a combination thereof.

The local storage unit 26 and the memory device 32 may include volatile and/or nonvolatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

In an embodiment, a computer program comprises program code, which, when executed by a computing system, causes the computing system to perform the method according to the present principles.

Fig. 4 schematically shows a lighting unit 1 implementing object detection according to the present principles. The lighting unit 1 has a light source 2 and an image sensor 3, e.g. an infrared camera. An apparatus 20, 30 as depicted in Fig. 2 or Fig. 3 is provided for detecting a wanted moving object in a sequence of images captured by the image sensor 3. Responsive to detecting a wanted moving object by the apparatus 20, 30 a switching device 4 switches the light source 2 on and off.

In the following, an embodiment of the present principles shall be described in greater detail.

In this embodiment, a low-resolution static camera with an objective sensitive to near-infrared wavelengths (typically 700-1200 nm) is used as an image sensor. The camera is equipped with an array of infrared LEDs. The interfaces between the camera and the Linux-based SoC, which is used as a processing device, can be implemented via CSI (Camera Serial Interface) or USB.

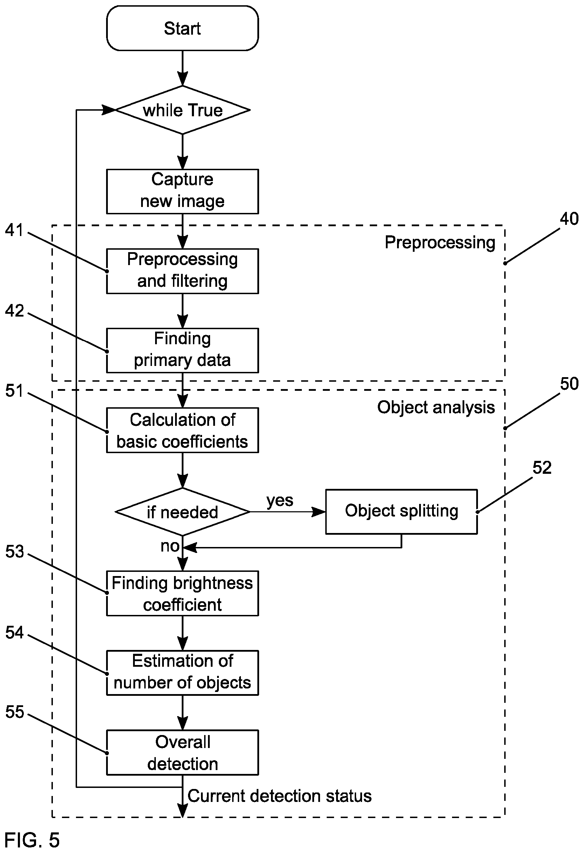

The overall detection process is shown in Fig. 5. The detection process can be divided into two stages, namely an optional preprocessing stage 40 and an object analysis stage 50. The preprocessing stage 40 provides the base for the subsequent object analysis procedure. It includes the following steps:

- Preprocessing and filtering 41;
- Finding primary data 42.

In the object analysis stage 50 a sequence of procedures is executed, namely:

- Calculation of basic coefficients 51;
- Object splitting 52 (optional);
- Finding brightness coefficient 53;
- Estimation of number of objects 54;
- Overall detection (estimation of coefficients) 55.

In the preprocessing and filtering step 41, background subtraction methods with a movement detection approach as mentioned further above are used for primary image processing. Images captured by the static camera, i.e. mounted on a fixed object with a relatively constant background scene, are processed by a background subtraction algorithm. The processing result is a binary mask containing a moving object, which is supposed to be processed further. Preferably, an adaptive Gaussian mixture model (MOG2 [1]) is used for background subtraction.

The filtering applies morphological operations to an image produced by the previous background subtraction stage. Erosion is performed to remove white noise caused by insignificant fluctuations and gradual lighting changes. Dilation is used for increasing the region of an object to join broken parts, because erosion tends to shrink objects.

The step 42 of finding primary data takes a filtered binary mask as input data. In case an object is present in the binary mask, the following geometrical data of the object are determined:

- The contour area (represented by a number);

- A bounding rectangle (represented by an array with corner's coordinates and sides' length).

This data may be determined using common methods of the Open Source Computer Vision Library as well as Green's theorem.

The objects analysis stage 50 includes a calculation of basic coefficients, resolving of problematic cases, i.e. ambiguous scenes that can cause false detection, and a final evaluation of the obtained parameters with the aim of detecting wanted objects and avoiding the influence of obstructing factors.

During the calculation 51 of basic coefficients, parameters of the moving object are determined using the previously obtained geometrical data. However, first a margin crossing filtering is performed. When the object enters or leaves a field of camera vision, the object's body is not completely present in the image. This can lead to an incorrect determination of its geometrical parameters. For instance, an appearing car can, at some moment of entering the image, have geometrical parameters corresponding to a pedestrian or a cyclist. To detect crossing of image borders, margins are used.

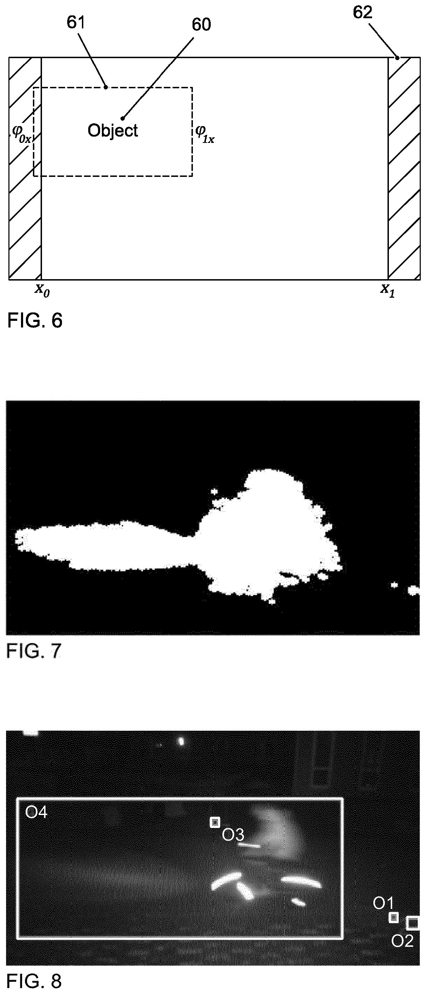

Margins are shown as hashed regions in Fig. 6. The status of the margin crossing by an object allows considering only those moving objects whose body is fully located in the image, i.e. only objects that do not have intersections with the image border, to avoid an erroneous evaluation.

Two margin areas are preferably adjoined to the left and right image borders, as crossing of these borders is the most likely. The borders of the margin areas are located at the coordinates $x_0$, $x_1$ and are shifted relative to the image borders by about 3 to 4 pixels.

The status of the margin crossing is *True* if the object has no intersections with the image borders, otherwise the status is *False*:

$$s_{cross\_}status = \begin{cases} \textit{True if } \varphi_{0x} > x_0 \lor \varphi_{1x} < x_{01} \\ \textit{False otherwise} \end{cases}, \qquad (1)$$

where $\varphi_{0x}$, $\varphi_{1x}$ are the coordinates of the left side and the right side of the bounding rectangle of the object, respectively.

To unify the geometrical parameters, such as bounding rectangle area, contour area and orientation, to a scalar value, the area coefficient $c_{rect}$ is used. This geometrical coefficient is calculated as:

$$c_{rect} = A_{obj} \cdot k \cdot \frac{h^2 + 2 \cdot h \cdot w + w^2}{4 \cdot h \cdot w}, \qquad (2)$$

where $A_{obj}$ is the object contour area, h and w are the height and the width of the bounding rectangle, respectively, and $k$ is an orientation coefficient:

$$k = \begin{cases} 1 \text{ if } t_{min} \leq \dfrac{h}{w} \leq t_{max}, \\ -1 \text{ otherwise} \end{cases} \qquad (3)$$

where $t_{min}$ and $t_{max}$ are the minimal and maximal values of the ratio $h/w$ for the bounding rectangle, which are the most probable and typical for a pedestrian or a cyclist. The values of $t_{min}$ and $t_{max}$ are not dependent on image resolution. Suitable values, which have been found empirically, are $t_{min} = 0.7$ and $t_{max} = 2.5$.

The coefficient $k$ is used to filter out very elongated horizontal and vertical objects, which have a low probability of belonging to the desired class of objects. In other words, in this implementation the value of the area coefficient is negative when the object does not have the typical elongation of the shape of a pedestrian or a cyclist.

The extent e is the ratio of the object contour area to the bounding rectangle area:

$$e = \frac{A_{obj}}{A_{rect}}, \qquad (4)$$

where $A_{obj}$ is the object contour area and $A_{rect}$ is the bounding rectangle area.

The extent is interpreted as a coefficient indicating how much of the bounding rectangle is filled by the object contour. The parameter allows eliminating insignificant fluctuations of background objects or lighting spots, which are frequently present in the images as disproportionate and non-uniform objects.

There are some cases when the shape of a moving object and the lighting spot of its lamps are presented as one object, e.g. for a cyclist. This can lead to a false-negative detection, because the shape of the object and, consequently, the area coefficient are not typical for a cyclist. To reduce the probability of non-detected objects, depending on the area coefficient an object may be split into two or three sub-objects with equal width of the respective bounding rectangle along a vector of a supposed movement direction. After the splitting procedure, the basic coefficients for these sub-objects are calculated. The splitting is preferably performed only for objects that satisfy a splitting condition:

$$e < e_{thr} \text{ and } c_{s\,min} \leq c_{rect} \leq c_{s\,max} , \qquad (5)$$

where e is the extent value of the object in accordance with formula (4) and $e_{thr}$ is an extent threshold indicating that the bounding rectangle of the object is insufficiently filled by the object contour area. The value of the extent threshold does not depend on the image resolution. A suitable value, which has been found empirically, is $e_{thr}$ = 0.5. $c_{s\,min}$ and $c_{s\,max}$ are boundary values of a geometrical coefficient interval, which correspond to values of problematic objects. For an image resolution of 100×75 pixels, these values have been experimentally determined as $c_{s\,min}$ = -5000 and $c_{s\,max}$ = -2500.

An example of object splitting shall now be described with reference to Figs. 7 to 10.

Fig. 7 shows a filtered background subtraction mask, which is the basis for object detection.

Fig. 8 shows an image with originally detected bounding rectangles. As can be seen, four objects have been detected based on the background subtraction mask. Objects O1, O2 and O3 can be estimated as noise, i.e. as unwanted objects. Object 04 includes the cyclist and the lighting spot of the cyclist. This object will undergo a splitting operation.

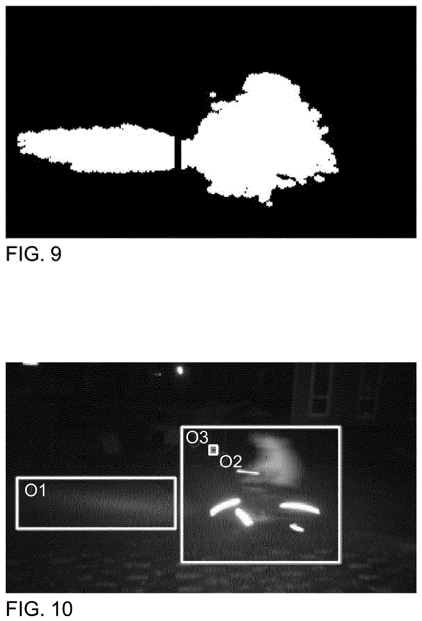

Fig. 9 and Fig. 10 show a split background subtraction mask and a corresponding image with bounding rectangles after object splitting, respectively. As can be seen, three objects have been detected based on the background subtraction mask. Object O1 is the lighting spot of the cyclist. This object will be considered an unwanted object. Object O2 is noise and thus also an unwanted object. Object O3 is the cyclist.

The above approach is based on the assumption that the extent value and the area coefficient of a lighting spot are different from extent values and area coefficients of desired objects. Using object splitting thus allows separating a desired object from a lighting spot and to recalculate basic coefficients for each object for further estimation.

Sudden lighting changes produced by lamps of moving vehicles can significantly influence the detection performance. A lighting spot of a vehicle can take a geometrical shape of an object that leads to a false-positive detection. A brightness coefficient $c_{bight}$ allows estimating the presence of lighting spots on objects that were produced by background subtraction.

The coefficient includes two variables:

- $A_{interbright}$, the area of intersections between the contour area of an object and contour areas of bright regions. $A_{interbright}$ is the sum of all contour areas of bright regions that are located within the contour area of an object.
- $A_{obj}$, the contour area of the detected object.

The brightness coefficient can be calculated as:

$$c_{bright} = \frac{A_{interbright}}{A_{obj}} . \qquad (6)$$

If the resulting brightness coefficient is larger than a threshold, the object is considered a vehicle's lamp or a light-caused object. Bright regions are found using the original images. A pixel is considered bright if its value exceeds an empirically determined threshold.

The difference between human movement and vehicle movement can be expressed by a variable $c_{number}$ indicating a number of objects registered in result of background subtraction. Typically, for an image resolution of 100×75 pixels the movement of one pedestrian or cyclist produces up to three objects in the background mask. In contrast, car movement causes up to 70 objects, mostly the light reflections. On this basis the car movement can be detected in advance, typically 5-10 m before the car appears in the camera's field of vision, since the lighting spot enters the camera's field of vision earlier. The resulting coefficient can be represented by a Boolean value, which indicates movement of a vehicle nearby the control area.

The evaluation of the various parameters is performed using the following conditions:

- Geometrical coefficient status:

$$c_{rect\_}status = \begin{cases} True \text{ if } r_{min} \leq c_{rect} \leq r_{max} \\ False \text{ otherwise} \end{cases} , \qquad (7)$$

where $c_{rect}$ is the geometrical coefficient calculated for an object under consideration and $r_{min}$ and $r_{max}$ are boundary values of an interval which is typical for an object to be detected. For a pedestrian moving in a distance of 2-13 meters from the camera and an image resolution of 100×75 pixels suitable values have been empirically determined as $r_{min}$ = 166 and $r_{max}$ = 800. For a cyclist with the same image scene and resolution parameters suitable values have been empirically determined as $r_{min}$ = 850 and $r_{max}$ = 1660.

- Extent status:

$$e\_status = \begin{cases} True \text{ if } e > e_{thr} \\ False \text{ otherwise} \end{cases}, \qquad (8)$$

where e is the extent value determined for an object under consideration and $e_{thr}$ is a threshold separating wanted and unwanted objects. The value of the extent threshold does not depend on the image resolution. A suitable value for pedestrians or cyclists, which has been found empirically, is $e_{thr}$ = 0.5.

- Brightness coefficient status:

$$c_{bright}\_status = \begin{cases} True \text{ if } c_{bright} < c_{thr} \\ False \text{ otherwise} \end{cases}, \qquad (9)$$

where $c_{bright}$ is the value of the brightness coefficient calculated for an object under consideration and $c_{thr}$ is a threshold separating acceptable coefficient values of bright regions on objects and vehicle's lamp objects. The value of the threshold does not depend on the image resolution. A suitable value, which has been found empirically, is $c_{thr}$ = 0.2.

- Object number status:

$$c_{number}\_status = \begin{cases} True \text{ if } c_{number} < c_{number\,car} \\ False \text{ otherwise} \end{cases}, \qquad (10)$$

where $c_{number}$ is a number of registered objects and $c_{number\,car}$ is a typical number of objects to be registered when car movement occurs. For an image resolution of 100×75 pixels, a suitable value has been empirically determined as $c_{number\,car}$ = 30.

In a final evaluation, the detection status of an object is *True* when all its coefficients have the status *True*:

$$detection\_status = \begin{cases} True \text{ if } s_{cross}\_status \wedge c_{rect}\_status \wedge e\_status \\ \wedge\, c_{bright}\_status \wedge c_{amount}\_status \\ False \text{ otherwise} \end{cases}. \qquad (11)$$

The value *True* is interpreted as a presence of a wanted object, i.e. an object of the target detection group, in the control area.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus are implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

## References

[1] T. Trnovszky et al.: "Comparison of Background Subtraction Methods on Near Infra-Red Spectrum Video Sequences", presented at the TRANSCOM 2017, 2017.

## Claims

1. A method of detecting a wanted moving object in a sequence of images captured by an image sensor (3), the method comprising:

   - obtaining (10) information about a bounding rectangle (61) of a moving object (60) in the sequence of images and a contour area of the moving object (60);
   - determining (11, 51) geometrical coefficients for the moving object (60) using the information about the bounding rectangle (61) and the contour area of the moving object (60); **characterized in that**,
   the step of determining geometrical coefficients (11, 51) for the moving object (60) includes determining an area coefficient $c_{rect}$, which is determined from a height and a width of the bounding rectangle (61) and the contour area of the moving object (60) and an orientation coefficient being dependent on the height to width ratio of the bounding rectangle, wherein the step of determining said area coefficient $c_{rect}$ further includes a step of unifying, the geometrical parameters bounding rectangle area, contour area and orientation coefficient to a scalar value, namely said area coefficient $c_{rect}$ being calculated according to the formula

   $$c_{rect} = A_{obj} \cdot k \cdot \frac{h^2 + 2 \cdot h \cdot w + w^2}{4 \cdot h \cdot w},$$

   where $A_{obj}$ is the object contour area, $h$ and $w$ are the height and the width of the bounding rectangle, respectively, and $k$ is said orientation coefficient, and wherein the step of determining geometrical coefficients further includes determining an extent coefficient e according to the formula

   $$e = \frac{A_{obj}}{A_{rect}},$$

   where $A_{obj}$ is the object contour area and $A_{rect}$ is the bounding rectangle area,

   - determining (12, 55) further object coefficients, margin crossing $S_{cross}$ representing moving objects whose body is fully located in the image, brightness coefficient $C_{bright}$, representing the presence of lighting spots on objects and object number $C_{number}$;
   - determining the status true or false of each object coefficient margin crossing $S_{cross}$, area coefficient $C_{rect}$, extent coefficient e, brightness coefficient $C_{bright}$, and object number $C_{number}$, by comparing each object coefficient with a respective threshold;
   - determining (12, 55) whether the moving object (60) is a wanted moving object based on the status of the object coefficients, margin crossing $S_{cross}$, area coefficient $C_{rect}$, extent coefficient e, brightness coefficient $C_{bright}$, and object number $C_{number}$; where the object is considered to be a wanted object when all its object coefficients margin crossing $S_{cross}$, area coefficient $C_{rect}$, extent coefficient e, brightness coefficient $C_{bright}$, and object number $C_{number}$ have the status true.

2. The method according to claim 1, wherein the sequence of images is preprocessed (41) by a background subtraction algorithm and a movement detection algorithm.

3. The method according to claim 1 or 2, wherein a filtering is applied to the moving object (60) by determining whether the bounding rectangle overlaps with a margin area (62) of the image sensor (3).

4. The method according to any one of the preceding claims, wherein the moving object (60) is determined (12, 55) not to be a wanted moving object if the extent coefficient is smaller than a threshold.

5. The method according to any one of the preceding claims, wherein the moving object is split (52) into two or more sub-objects in dependence on the geometrical coefficients.

6. The method according to claim 5, wherein the moving object is split (52) into two or more sub-objects when the extent coefficient e is smaller than a threshold and the area coefficient $c_{rect}$ falls within a second range of values.

7. The method according to any one of the preceding claims, wherein a brightness coefficient $C_{bright}$ is determined (53) for the moving object (60) from a ratio of bright areas within the contour area of the moving object (60) to the contour area of the moving object (60), and wherein the moving object (60) is determined (12, 55) not to be a wanted moving object if the brightness coefficient $C_{bright}$ is larger than a threshold.

8. The method according to any one of the preceding claims, wherein the object number value $C_{number}$ is determined (54), which indicates the number of objects found in an image of the sequence of images, wherein the moving object (60) is determined (12, 55) not to be a wanted moving object if the object number value $C_{number}$ is larger than a threshold.

9. The method according to any one of the preceding claims, wherein the sequence of images comprises infrared images.

10. The method according to any one of the preceding claims, wherein the wanted moving object (60) is a pedestrian or a cyclist.

11. An apparatus (20, 30) for detecting a wanted moving object in a sequence of images captured by an image sensor (3), **characterized in that** the apparatus (20, 30) is configured to perform the steps of a method according to one of claims 1 to 10.

12. Computer program comprising program code which, when executed by a computing system, causes the computing system to perform the steps of a method according to one of claims 1 to 10 for detecting a wanted moving object (60) in a sequence of images captured by an image sensor (3).

13. A lighting unit (1) comprising:

   - a light source (2);
   - an image sensor (3);
   - an apparatus (20, 30) according to claim 11 for detecting a wanted moving object (60) in a sequence of images captured by the image sensor (3); and
   - a device (4) for switching on and off the light source (2) responsive to detecting a wanted moving object (60).


**Patentansprüche**

1. Verfahren zum Erkennen eines gewünschten sich bewegenden Objekts in einer von einem Bildsensor (3) erfassten Bildsequenz, wobei das Verfahren umfasst:

   - Erhalten (10) von Informationen über ein Begrenzungsrechteck (61) eines sich bewegenden Objekts (60) in der Bildsequenz und einen Konturbereich des sich bewegenden Objekts (60);
   - Bestimmen (11, 51) geometrischer Koeffizienten für das sich bewegende Objekt (60) unter Verwendung der Informationen über das Begrenzungsrechteck (61) und den Konturbereich des sich bewegenden Objekts (60);
   **dadurch gekennzeichnet, dass**

der Schritt des Bestimmens geometrischer Koeffizienten (11, 51) für das sich bewegende Objekt (60) Bestimmen eines Bereichskoeffizienten $c_{rect}$, der aus einer Höhe und einer Breite des Begrenzungsrechtecks (61) und dem Konturbereich des sich bewegenden Objekts (60) beinhaltet, und eines Ausrichtungskoeffizienten, der von dem Verhältnis von Höhe zu Breite des Begrenzungsrechtecks abhängt, wobei der Schritt des Bestimmens des Bereichskoeffizienten $c_{rect}$ weiter einen Schritt des Vereinigens der geometrischen Parameter von Begrenzungsrechteckbereich, Konturbereich und Ausrichtungskoeffizienten zu einem Skalarwert beinhaltet, wobei der Bereichskoeffizient $c_{rect}$ gemäß der Formel berechnet wird

$$c_{rect} = A_{obj} \cdot k \cdot \frac{h^2 + 2 \cdot h \cdot w + w^2}{4 \cdot h \cdot w},$$

wobei $A_{obj}$ der Objektkonturbereich ist, h und w die Höhe beziehungsweise die Breite des Begrenzungsrechtecks sind, und k der Orientierungskoeffizient ist, und wobei der Schritt des Bestimmens von geometrischen Koeffizienten weiter Bestimmen eines Erstreckungskoeffizienten e gemäß der Formel beinhaltet

$$e = \frac{A_{obj}}{A_{rect}},$$

wobei $A_{obj}$ der Objektkonturbereich ist und $A_{rect}$ der Begrenzungsrechteckbereich ist,

- Bestimmen (12, 55) von weiteren Objektkoeffizienten, Randübergang $S_{cross}$, der sich bewegende Objekte repräsentiert, deren Körper sich vollständig im Bild befindet, Helligkeitskoeffizient $C_{bright}$, der das Vorhandensein von Lichtflecken auf Objekten repräsentiert, und Objektnummer $C_{number}$;
- Bestimmen des Status "wahr" oder "falsch" jedes Objektkoeffizienten, Randübergang $S_{cross}$, Bereichskoeffizient $C_{rect}$, Erstreckungskoeffizient e, Helligkeitskoeffizient $C_{bright}$ und Objektnummer $C_{number}$ durch Vergleichen jedes Objektkoeffizienten mit einem jeweiligen Schwellenwert;
- Bestimmen (12, 55), ob das sich bewegende Objekt (60) ein gewünschtes sich bewegendes Objekt ist, basierend auf dem Status der Objektkoeffizienten, Randübergang $S_{cross}$, Bereichskoeffizient $C_{rect}$, Erstreckungskoeffizient e, Helligkeitskoeffizient $C_{bright}$ und Objektnummer $C_{number}$; wobei das Objekt als gewünschtes Objekt gilt, wenn alle seine Objektkoeffizienten Randübergang $S_{cross}$, Bereichskoeffizient $C_{rect}$, Erstreckungskoeffizient e, Helligkeitskoeffizient $C_{bright}$ und Objektnummer $C_{number}$ den Status "wahr" aufweisen.

2. Verfahren nach Anspruch 1, wobei die Bildsequenz durch einen Hintergrundsubtraktionsalgorithmus und einen Bewegungserkennungsalgorithmus vorverarbeitet (41) wird.

3. Verfahren nach Anspruch 1 oder 2, wobei eine Filterung auf das sich bewegende Objekt (60) angewendet wird, indem bestimmt wird, ob sich das Begrenzungsrechteck mit einem Randbereich (62) des Bildsensors (3) überlappt.

4. Verfahren nach einem der vorstehenden Ansprüche, wobei bestimmt wird (12, 55), dass das sich bewegende Objekt (60) kein gewünschtes sich bewegendes Objekt ist, wenn der Erstreckungskoeffizient kleiner als ein Schwellenwert ist.

5. Verfahren nach einem der vorstehenden Ansprüche, wobei das sich bewegende Objekt in Abhängigkeit von den geometrischen Koeffizienten in zwei oder mehr Teilobjekte aufgeteilt (52) wird.

6. Verfahren nach Anspruch 5, wobei das sich bewegende Objekt in zwei oder mehr Teilobjekte aufgeteilt (52) wird, wenn der Erstreckungskoeffizient e kleiner als ein Schwellenwert ist und der Bereichskoeffizient $C_{rect}$ innerhalb eines zweiten Wertebereichs fällt.

7. Verfahren nach einem der vorstehenden Ansprüche, wobei ein Helligkeitskoeffizient $C_{bright}$ für das sich bewegende Objekt (60) aus einem Verhältnis von hellen Bereichen innerhalb des Konturbereichs des sich bewegenden Objekts (60) zum Konturbereich des sich bewegenden Objekts (60) bestimmt (53) wird, und wobei bestimmt (12, 55) wird, dass das sich bewegende Objekt (60) kein gewünschtes sich bewegendes Objekt ist, wenn der Helligkeitskoeffizient $C_{bright}$ größer als ein Schwellenwert ist.

8. Verfahren nach einem der vorstehenden Ansprüche, wobei der Objektnummernwert $C_{number}$ bestimmt (54) wird, der die Reihe von Objekten angibt, die in einem Bild der Bildsequenz gefunden wurden, wobei das sich bewegende Objekt (60) als kein gewünschtes sich bewegendes Objekt bestimmt (12, 55) wird, wenn der Objektnummernwert $C_{number}$ größer als ein Schwellenwert ist.

9. Verfahren nach einem der vorstehenden Ansprüche, wobei die Bildsequenz Infrarotbilder umfasst.

10. Verfahren nach einem der vorstehenden Ansprüche, wobei das gewünschte sich bewegende Objekt (60) ein Fußgänger oder ein Radfahrer ist.

11. Einrichtung (20, 30) zum Erkennen eines gewünschten sich bewegenden Objekts in einer von einem Bildsensor (3) erfassten Bildsequenz, **dadurch gekennzeichnet, dass** die Einrichtung (20, 30) konfiguriert ist, um die Schritte eines Verfahrens nach einem der Ansprüche 1 bis 10 durchzuführen.

12. Computerprogramm, das einen Programmcode umfasst, der, wenn er von einem Rechensystem ausgeführt wird, das Rechensystem veranlasst, die Schritte eines Verfahrens nach einem der Ansprüche 1 bis 10 zum Erkennen eines gewünschten sich bewegenden Objekts (60) in einer von einem Bildsensor (3) erfassten Bildsequenz auszuführen.

13. Beleuchtungseinheit (1), umfassend:

 - eine Lichtquelle (2);
 - einen Bildsensor (3);
 - eine Einrichtung (20, 30) nach Anspruch 11 zum Erkennen eines gewünschten sich bewegenden Objekts (60) in einer vom Bildsensor (3) erfassten Bildsequenz; und
 - eine Vorrichtung (4) zum Ein- und Ausschalten der Lichtquelle (2) als Reaktion auf das Erkennen eines gewünschten sich bewegenden Objekts (60).

**Revendications**

1. Procédé de détection d'un objet mobile recherché dans une séquence d'images capturées par un capteur d'images (3), le procédé comprenant :

 - l'obtention (10) d'informations sur un rectangle de délimitation (61) d'un objet mobile (60) dans la séquence d'images et une zone de contours d'objet mobile (60) ;
 - la détermination (11, 51) de coefficients géométriques pour l'objet mobile (60) en utilisant les informations sur le rectangle de délimitation (61) et la zone de contours d'objet mobile (60) ; **caractérisé en ce que**, l'étape de détermination des coefficients géométriques (11, 51) pour l'objet mobile (60) inclut la détermination d'un coefficient de surface $c_{rect}$, qui est déterminé à partir d'une hauteur et d'une largeur du rectangle de délimitation (61) et de la zone de contours d'objet mobile (60) et d'un coefficient d'orientation dépendant du rapport hauteur/largeur du rectangle de délimitation, dans lequel l'étape de détermination dudit coefficient de surface $c_{rect}$ inclut en outre une étape d'unification, des paramètres géométriques délimitant la surface du rectangle, la surface du contour et le coefficient d'orientation à une valeur scalaire, à savoir ledit coefficient de surface $c_{rect}$ étant calculé selon la formule

$$c_{rect} = A_{obj} \cdot k \cdot \frac{h^2 + 2 \cdot h \cdot w + w^2}{4\,h\,w},$$

 dans lequel $A_{obj}$ est la zone de contours d'objet, h et w sont respectivement la hauteur et la largeur du rectangle de délimitation, et k est ledit coefficient d'orientation, et dans lequel l'étape de détermination des coefficients géométriques inclut en outre la détermination d'un coefficient d'étendue e selon la formule

$$e = \frac{A_{obj}}{A_{rect}},$$

 dans lequel $A_{obj}$ est la zone de contours d'objet et $A_{rect}$ est la surface du rectangle de délimitation,

- la détermination (12, 55) d'autres coefficients d'objet, du franchissement de marge $S_{cross}$ représentant les objets mobiles dont le corps est entièrement situé dans l'image, du coefficient de luminosité $C_{bright}$, représentant la présence de points lumineux sur les objets et du nombre d'objets $C_{number}$ ;

- la détermination du statut vrai ou faux de chaque coefficient d'objet, franchisssement de marge $S_{cross}$, coefficient de surface $C_{rect}$, coefficient d'étendue e, coefficient de luminosité $C_{bright}$, et nombre d'objets $C_{number}$, en comparant chaque coefficient d'objet à un seuil respectif ;

- la détermination (12, 55) pour établir si l'objet mobile (60) est un objet mobile recherché en fonction de l'état des coefficients d'objet, du franchissement de marge $S_{cross}$, du coefficient de surface $C_{rect}$, du coefficient d'étendue e, du coefficient de luminosité $C_{bright}$, et du nombre d'objets $C_{number}$ ; dans lequel l'objet est considéré comme un objet recherché lorsque les coefficients d'objet, le franchissement de marge $S_{cross}$, le coefficient de surface $C_{rect}$, le coefficient d'étendue e, le coefficient de luminosité $C_{bright}$ et le nombre d'objets $C_{number}$ de celui-ci présentent tous le statut vrai.

2. Procédé selon la revendication 1, dans lequel la séquence d'images est prétraitée (41) par un algorithme de soustraction d'arrière-plan et un algorithme de détection de mouvement.

3. Procédé selon la revendication 1 ou 2, dans lequel un filtrage est appliqué à l'objet mobile (60) en déterminant si le rectangle de délimitation chevauche une zone de marge (62) du capteur d'image (3).

4. Procédé selon l'une quelconque des revendications précédentes, dans lequel l'objet mobile (60) est déterminé (12, 55) comme n'étant pas un objet mobile recherché si le coefficient d'étendue est inférieur à un seuil.

5. Procédé selon l'une quelconque des revendications précédentes, dans lequel l'objet mobile est divisé (52) en deux sous-objets, ou plus, en fonction des coefficients géométriques.

6. Procédé selon la revendication 5, dans lequel l'objet mobile est divisé (52) en deux sous-objets, ou plus, lorsque le coefficient d'étendue e est inférieur à un seuil et le coefficient de surface $C_{rect}$ tombe dans une seconde plage de valeurs.

7. Procédé selon l'une quelconque des revendications précédentes, dans lequel un coefficient de luminosité $C_{bright}$ est déterminé (53) pour l'objet mobile (60) à partir d'un rapport des zones lumineuses à l'intérieur de la zone de contours d'objet mobile (60) à la zone de contours d'objet mobile (60), et dans lequel l'objet mobile (60) est déterminé (12, 55) comme n'étant pas un objet mobile recherché si le coefficient de luminosité $C_{bright}$ est supérieur à un seuil.

8. Procédé selon l'une quelconque des revendications précédentes, dans lequel la valeur de nombre d'objets $C_{number}$ est déterminée (54), laquelle indique le nombre d'objets trouvés dans une image de la séquence d'images, dans lequel l'objet mobile (60) est déterminé (12, 55) comme n'étant pas un objet mobile recherché si la valeur de nombre d'objets $C_{number}$ est supérieure à un seuil.

9. Procédé selon l'une quelconque des revendications précédentes, dans lequel la séquence d'images comprend des images infrarouges.

10. Procédé selon l'une quelconque des revendications précédentes, dans lequel l'objet mobile recherché (60) est un piéton ou un cycliste.

11. Appareil (20, 30) de détection d'un objet mobile recherché dans une séquence d'images capturées par un capteur d'images (3), **caractérisé en ce que** l'appareil (20, 30) est configuré pour exécuter les étapes d'un procédé selon l'une des revendications 1 à 10.

12. Programme informatique comprenant un code de programme qui, lorsqu'il est exécuté par un système informatique, amène le système informatique à exécuter les étapes d'un procédé selon l'une des revendications 1 à 10 pour détecter un objet mobile recherché (60) dans une séquence d'images capturées par un capteur d'images (3).

13. Unité d'éclairage (1) comprenant :

- une source de lumière (2) ;
- un capteur d'image (3) ;
- un appareil (20, 30) selon la revendication 11 pour détecter un objet mobile recherché (60) dans une séquence d'images capturées par le capteur d'image (3) ; et
- un dispositif (4) permettant d'allumer et d'éteindre la source de lumière (2) en réponse à la détection d'un objet mobile recherché (60).

Obtain information about bounding
rectangle and contour area of object

10

Determine geometrical
coefficients for object

11

Determine whether object is a wanted
object based on coefficients

12

FIG. 1

FIG. 2

30

31

32

34

33

**FIG. 3**

1

20, 30

4

3

2

**FIG. 4**

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03098977 A1

**Non-patent literature cited in the description**

- **ANTONIO FERNÁNDEZ-CABALLERO** ; **LÓPEZ MARIA** ; **SERRANO-CUERDA JUAN**. Thermal-Infrared Pedestrian ROI Extraction through Thermal and Motion Information Fusion. *Sensors*, 10 April 2014, vol. 14 (4), 6666-6676
- **EUN JEON** ; **JONG-SUK CHOI** ; **JI LEE** ; **KWANG SHIN** ; **YEONG KIM** ; **TOAN LE** ; **KANG PARK**. Human Detection Based on the Generation of a Background Image by Using a Far-Infrared Light Camera. *Sensors*, 19 March 2015, vol. 15 (3), 6763-6788
- Pedestrian Detection for Driver Assistance Using Multiresolution Infrared Vision. **BERTOZZI M.** ; **BROGGI A.** ; **FASCIOLI A.** ; **GRAF T.** ; **MEINECKE M.** IEEE TRANSACTIONS ON VEHICULAR TECHNOLOGY. IEEE SERVICE CENTER, 01 November 2004, vol. 53, 1666-1678
- **T. TRNOVSZKY et al.** Comparison of Background Subtraction Methods on Near Infra-Red Spectrum Video Sequences. *TRANSCOM 2017*, 2017